# EUROPEAN PATENT APPLICATION

(11) **EP 4 518 378 A1**
(43) Date of publication of application: **05.03.2025**
(21) Application number: 24194345.5
(22) Date of filing: 13.08.2024
(51) Int. Cl.: H04W 4/80, H04L 69/18, H04W 84/12, H04W 84/18

(54) **SCHEDULE PRIORITIZATION FOR WIFI AND BLUETOOTH LOW ENERGY COMMUNICATIONS**

(30) Priority: 30.08.2023 RO 202300477
(71) Applicant: NXP USA, Inc., Austin TX 78735 (US)
(72) Inventor: Gucea, Doru Cristian, 5656AG Eindhoven (NL); Waheed, Khurram, 5656AG Eindhoven (NL); Stefan, George, 5656AG Eindhoven (NL)
(74) Representative: Miles, John Richard

(57) **Abstract**

A commissioner device is configured to determine, within a connection interval, a first anchor point during which communication with a first commissionee device occurs using the first communication protocol. The commissioner device is configured to determine, within the connection interval, a second anchor point during which communication with a second commissionee device of the plurality of commissionee devices occurs using the first communication protocol. The second anchor point is after the first anchor point in the connection interval and an end time of the first anchor point is separated from a beginning time of the second anchor point by a time period equal to or greater than a time period required to transmit a data packet using the second communication protocol. The commissioner device is configured to receive, during a time period determined by the second anchor point, a data transmission from the second commissionee device.

## Description

### FIELD

The present disclosure generally relates to scheduling wireless data transmissions and, more specifically, to a system and method for scheduling BLUETOOTH low energy (BLE) transmissions and wireless personal area network (WPAN) data transmissions to provide improved data throughput through a wireless data transmit and receive device.

### BACKGROUND

An increasing number of devices are configured to connect to networks in order to exchange information. In many cases, a single device includes a radio controller configured to operate in different modes to enable communications using a number of different protocols. For example, a typical device includes communication controllers enabling simultaneous communication using BLUETOOTH, BLUETOOTH low energy (BLE), wireless fidelity (WIFI) (e.g., 802.14), and mesh network communication protocols.

For particular protocols, a device includes a single radio controller configured to implement data communications via both BLE and wireless personal area network (WPAN) (e.g., Institute of Electrical and Electronic Engineers (IEEE) 802.15.4) protocols.

### SUMMARY

This Summary section is neither intended to be, nor should be, construed as being representative of the full extent and scope of the present disclosure. Additional benefits, features and embodiments of the present disclosure are set forth in the attached figures and in the description hereinbelow, and as described by the claims. Accordingly, it should be understood that this Summary section may not contain all of the aspects and embodiments claimed herein.

Additionally, the disclosure herein is not meant to be limiting or restrictive in any manner. Moreover, the present disclosure is intended to provide an understanding to those of ordinary skill in the art of one or more representative embodiments supporting the claims. Thus, it is important that the claims be regarded as having a scope including constructions of various features of the present disclosure insofar as they do not depart from the scope of the methods and apparatuses consistent with the present disclosure (including the originally filed claims). Moreover, the present disclosure is intended to encompass and include obvious improvements and modifications of the present disclosure.

The present invention generally relates to a system, including: an antenna; a radio controller electrically connected to the antenna, wherein the radio controller is configured to process signals received from the antenna using a first communication protocol or a second communications and encode signals for transmission by the antenna using the first communication protocol or the second communication protocol; and a controller configured to: determine a plurality of commissionee devices, determine, within a connection interval, a first anchor point during which communication with a first commissionee device occurs using the first communication protocol, and determine, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol; and receive, during a time period determined by the second anchor point, a data transmission from the second commissionee device.

In some aspects, the techniques described herein relate to a system, including: an antenna; a radio controller electrically connected to the antenna, wherein the radio controller is configured to process signals received from the antenna using a first communication protocol or a second communications and encode signals for transmission by the antenna using the first communication protocol or the second communication protocol; and a controller configured to: determine, within a connection interval, a plurality of anchor points during which communication with a plurality of commissionee devices occurs using the first communication protocol, receiving a first signal from the antenna, decoding the first signal using the second communication protocol, wherein the first signal encodes an indication of a size of a first data frame encoded by the first signal, determining, using the size of the first data frame, a first anchor point of the plurality of anchor points that will occur at the same time a fragment of the first data frame is scheduled to be received, and transmitting, to a first commissionee device out of the plurality of commissionee devices, wherein the first commissionee device is associated with the first anchor point, an instruction causing the first commissionee device to not transmit data during the first anchor point.

In some aspects, the techniques described herein relate to a method, including: determining, by a commissioner device, a plurality of commissionee devices, wherein the commissioner device includes an antenna and a radio controller electrically connected to the antenna, wherein the radio controller is configured to process signals received from the antenna using a first communication protocol or a second communications and encode signals for transmission by the antenna using the first communication protocol or the second communication protocol; determining, within a connection interval, a first anchor point during which communication with a first commissionee device occurs using the first communication protocol, and determining, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 shows an illustrative architecture, set in an exemplary environment 102, which includes a device that can incorporate a communication subsystem configured in accordance with the present disclosure.
FIG. 2 is a flowchart depicting an example message flow for commissioning a commissionee device by a commissioner device to enable data communications between the two devices.
FIGS. 3-6 are illustrations depicting an algorithm for distributing BLE anchor points within a communication time interval.
FIG. 7 depicts a communication protocol in which a commissioner device may be configured to skip or ignore BLE transmissions occurring at BLE anchor points to ensure successful receipt of 802.15.4 data transmissions.
FIG. 8 depicts a communication protocol in which a commissioner device may be configured to skip or ignore BLE transmissions occurring at BLE anchor points to ensure successful receipt of 802.15.4 data transmissions from multiple transmitting devices.
FIG. 9 depicts a communication protocol in which a commissioner device may be configured to cause a recipient device to skip or ignore BLE anchor points to ensure successful delivery of 802.15.4 data transmissions.
FIG. 10 is a flow chart depicting a method that may be implemented by the anchor point scheduling subsystem of the commissioning device of FIG. 1 or the commissioner device of FIG. 2.

### DETAILED DESCRIPTION OF THE ILLUSTRATED EMBODIMENTS

The present invention generally relates to a system and method for scheduling wireless data transmissions and, more specifically, to a system and method for scheduling BLUETOOTH low energy (BLE) transmissions and wireless personal area network (WPAN) data transmissions to provide improved data throughput through a wireless data transmit and receive device.

In many instances, an electronic device may utilize a number of different wireless communications protocols to transmit and receive data for a connected antenna. For example, a network-connected speaker, smart phone device, or home automation device or sensor may communicate using WPAN and BLE communication protocols.

For devices that are configured to communicate primarily using WPAN communication protocols, the devices may initially rely upon BLE communications to identify and receive proper credentials to connect to a WPAN network. Once connected, the device can rely on WPAN protocols going forward for further data transmissions.

Often, these types of devices include a single radio controller that can be configured in different modes to effect communications via the different communication protocols. In such devices with a single radio controller, however, that radio controller can only be configured to utilize a single communication protocol at any particular time. Each time the communication protocol changes, the radio controller must be reconfigured to enable communications via the designated protocol.

Consequently, a single device (e.g., a device commissioner) may be used to communicate with other devices via multiple protocols. When communicating with devices via BLE, the device may require an initial commissioning (e.g., setup) process before data communications can occur via a second communication protocol (e.g., IEEE 802.15.4). In current device implementations, this commissioning process can take a relatively long period of time. Consequently, if a single commissioner device is tasked with commissioning multiple devices via BLE communications, the commissioner device may be unable to communicate via other protocols (e.g., WPAN protocols) while the commissioning of multiple devices occurs via BLE messaging. This can result in lost or delayed data transmissions using protocols other than BLE when commissioning multiple devices.

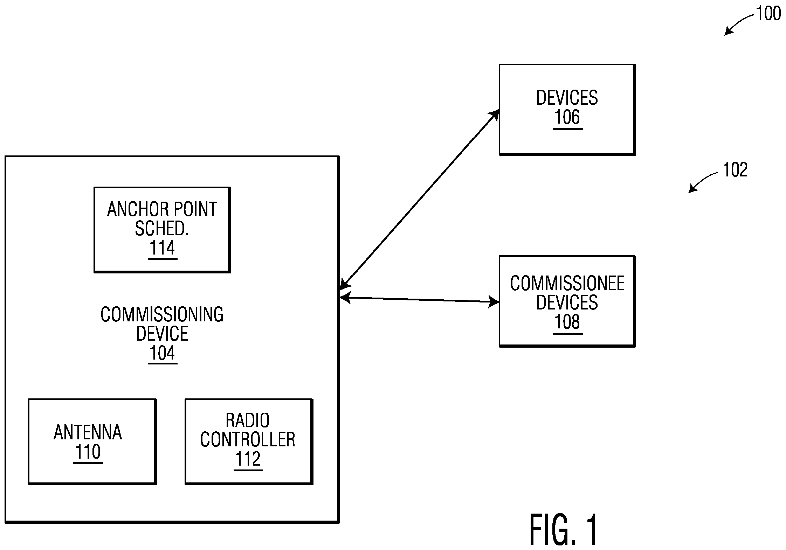

To illustrate, FIG. 1 shows an example architecture 100, set in an exemplary environment 102, which includes a device 104 that can incorporate a communication subsystem configured in accordance with the present disclosure. In various embodiments, device 104 is a commissioning device configured to communicate with a number of other devices via various communication protocols. In the depicted example, device 104 is configured to communication with a first set of devices 106 (e.g., network routers, hubs, and other devices) via a first communication protocol, such as a wireless fidelity (WIFI) (e.g., 802.14) communication protocols.

At the same time, device 104 is configured to communicate with a second set of devices 108 (e.g., Internet-of Things (IoT) devices, smart appliances, sensors) via a second communication protocol, such as a BLUETOOTH low energy (BLE) protocol. Devices in the second set of devices 108 require a commissioning process that causes them to be configured to communicate with device 104 before they can communicate data with device 104.

In communicating with first set of devices 106 and second set of devices 108 transmits and receives wireless signals via antenna 110. The signals are transmitted via particular communication protocols as determined by radio controller 112, which is electrically connected to antenna 110. When implementing a particular communication protocol, 112 is configured to use that protocol when decoding wireless signals received via 110 or encoding signals that are to be transmitted by antenna 110. Commissionee devices 108, which are themselves configured to communicate wirelessly using a number of different communication protocols, may themselves include similar antennas and radio controllers that are configured to switch between communication protocols when transmitting or receiving signals via their respective antenna systems.

In accordance with the present disclosure, commissioning device 104 is configured to include an anchor point scheduling subsystem 114 that is configured to determine a scheduling scheme for BLE anchor points to reduce or mitigate potential interference occurring between BLE traffic and 802.15.4 frame retransmissions. In various embodiments, anchor point scheduling subsystem 114 is configured to implement the anchor point scheduling algorithms of the present disclosure to reduce potential interference between BLE and 802.15.4 communications and, thereby, increase a number of commissionee devices that may be interacted with at or about the same time. As such, anchor point scheduling subsystem 114 of commissioner device 104 can improve communication network throughput and increase the number of commissionee devices 108 that can be commissioned over a given time period as compared to conventional networking approaches.

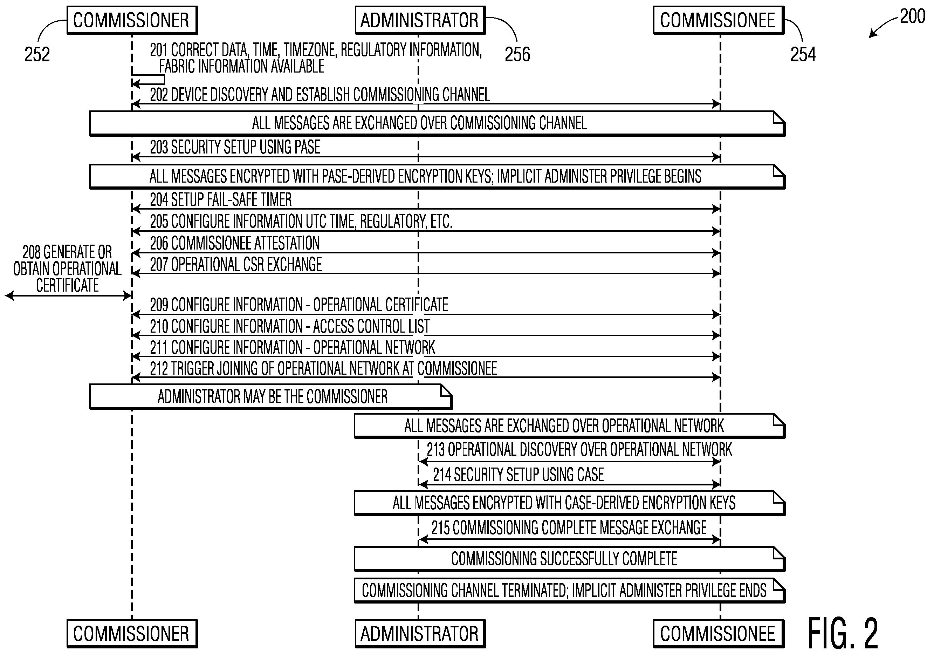

FIG. 2 is a flowchart depicting an example message flow 200 for commissioning a commissionee device by a commissioner device to enable data communications between the two devices. The diagram of FIG. 2 depicts message communications between a commissioner device 252 and a commissionee device 254. An administrator 256 entity is also depicted, where that entity is implemented as a logic function that may be implemented within or by commissioner device 202.

In step 201, to initiate the device commissioning process commissioner device 252 configures itself with correct date and time information, and information describing how its wireless communications will be implemented (e.g., regulatory and transport fabric setup). In step 202, commissioner device 252 receives a request from commissionee device 254 for the establishment of a communication channel with commissioner device 252.

Following step 202, all messages exchanged between commissioner device 252 and commissionee device 254 occur via the commissioning channel, which is established using a first (e.g., BLE) communication protocol.

In step 203, using that commissioning channel, commissioner device 252 receives a security setup message from commissionee device 254 and all future communications are encrypted using the cryptographical information contained within that security setup message.

In step 204, a commissionee device 254 setup timer is configured, and in step 205, 206, and 207 time and regulatory information, commissionee device 254 attestation data, and certificate signing request data is exchanged.

In step 208, commissioner device 252 determines or generates an operational certificate. The certificate is then configured (step 209), an access control list is determined for commissionee device 254 (step 210), operation network information is configured (step 211) and the triggering of commissioner device 252 and commissionee device 254 to join the operational network occurs (step 212). The operational network is implemented via a second protocol (e.g., a WPAN IEEE 802.15.4 communication protocol).

At that time, commissioner device 252 implements (optionally) administrator 256 to perform discovery of commissionee device 254 (step 213), configure security settings (step 214) and then transmit a commissioning completed message to commissionee device 254 (step 215). At that time, commissioning of commissionee device 254 is complete.

When commissioner device 252 is configured to communicate via the operational network (e.g., a IEEE 802.15.4 network), this requires that commissioner device 252 be configured to support BLE-15.4 dual-mode. For such devices, the commissioning process involves the following steps. First, a secure channel over BLE is established between the commissionee device (e.g., commissionee device 254) and the commissioner device (e.g., commissioner device 252). With the secure channel established, information related to the parameters of a Thread Border Router (e.g., as implemented by the commissioner device) are transferred over the BLE secure channel from the commissioner device to the commissionee device. While maintaining that BLE connection, the commissionee device connects to the Thread Border Router using the IEEE 802.15.4 WIFI protocol using the previously obtained information. The commissioner device then discovers the commissionee device via the IEEE 802.15.4 protocol. Once that 802.15.4 connection is established between the commissioner and commissionee devices, the original BLE connection can be closed or otherwise terminated.

To implement this transaction (e.g., in which an initial BLE connection is used to bootstrap a subsequent IEEE 802.15.4 connection between commissioner and commissionee devices), both the BLE and IEEE 802.15.4 data communications must be active for a short period of time (referred to as "dual-mode" operation). This may be necessary so that if the commissioner device is not able to discover the commissionee device on the operational network (i.e., the IEEE 802.15.4 network), the commissioner device can report that error to the commissionee device via the previously-established BLE channel.

In the case of commissionee devices having only a single radio controller for both BLE and IEEE802.15.4 communications, the dual-mode operations are implemented by time-switching between the two communication protocols. In that case, BLE communications have priority at all times. Consequently, a device's radio controller is automatically switched to BLE mode during a connection event. After the connection event ends, the commissioner device will signal this to the commissionee device's dual-mode scheduler and the commissionee device's radio will be switched to IEEE 802.15.4 to enable ongoing communications using that protocol going forward. The device's radio controller will be switched back to BLE mode at the next BLE connection interval.

In typical applications, this dual-mode implementation is adequate for a commissioner device that needs to commission a single commissionee device. In those situations, BLE traffic is typically sparse and leaves adequate time for IEEE 802.15.4 communications between BLE communications. During device setup (e.g., when commissioning a commissionee device), most BLE packets are exchanged before the "Operational Discovery and CASE" phase (e.g., steps 213 and 214 of FIG. 2). After that phase, the BLE connection is kept alive through the ongoing transmission of BLE empty frames until the 802.15.4 connection on the operational network is successfully implemented. The BLE connection is then closed if the commissionee device is successfully discovered on the operational network

In some typical implementations, the connection interval of an 802.15.4 network is 48.75 milliseconds (ms). As such, most of the request and response messages implemented in the device setup process can fit within single BLE data packets (e.g., less than or equal to 251 bytes). Only a few responses (e.g., X509 certificates) require around 3 BLE data packets. Even in that case, at most only one data packet/connection event is observed.

Consequently, for a single device the connection operation illustrated in FIG. 2 may interfere with other ongoing IEEE 802.15.4 communications for only about 2.1 ms (i.e., the time required for sending 251 bytes at 1M BLE PHY rate) every 48.5 ms or so. This interference rate can be handled by existing IEEE 802.15.4 communications retransmission mechanisms.

Although this can be adequate when commissioning a single device, it can present problems when commissioning multiple devices somewhat simultaneously. In that case, a commissioner device may also play the role of a Thread Border Router in which case the commissioner device is required to handle multiple BLE connections (e.g., acting as a BLE master) while also handling ongoing IEEE 802.15.4 traffic.

In one example case of commissioning multiple devices, the connection interval for all the BLE connections may be configured to be 40 ms and the time offset or delta between two consecutive anchor points for BLE transmissions may be set to 8 ms. In that configuration, the time required for sending a single IEEE 802.15.4 frame of max length (e.g., 127 bytes + PHY HEADER + PREAMBLE + SFD) followed by an enh-ACK of maximum size (127 bytes) is more than 8 ms. Because the time offset between BLE anchor points is equal to 8 ms, no IEEE 802.15.4 packets will be successful received by the commissioner device between the BLE anchor points, because the repetitive BLE anchor points will cause the commissioner device's radio controller to be continually switched back to BLE mode at each BLE anchor point. Even for situations in which the 802.15.4 data frames are ACK'ed with Immediate ACKs, the minimum time required for receiving and ACK'ing a frame is about 4ms. Given that transferring a 251-byte packet using BLE (e.g., at a 1M PHY RATE) takes around 2.1 ms, this leaves less than 6 ms for IEEE 802.15.4 communications between two consecutive BLE events, which is inadequate for a successful IEEE 802.15.4 data transmission.

Consequently, it can be important to ensure that the IEEE 802.15.4 retransmission mechanism can handle missing IEEE 802.15.4 frames that result from the multiple BLE connection events generated by multiple commissionee devices.

To remedy these difficulties, the present disclosure provides a mechanism that allows prioritization of IEEE 802.15.4 traffic over BLE traffic enabling a device to play two roles within a communication system: 1) thread border router, plus 2) commissioner device. Specifically, device operations are modified to reduce the number of times a BLE device executes a wake-up function to keep the corresponding BLE connection active in case there is reduced BLE traffic. Between the commissioner device and corresponding commissionee devices, BLE anchor points are selected such that retransmissions of IEEE 802.15.4 are minimized, thereby reducing data traffic overhead. Additionally, the 6lowpan "datagram_size" field of an IEEE 802.15.4 frame may be utilized such that BLE traffic is deprioritized while all the fragments of an IEEE 802.15.4 packet are received. Furthermore, BLE frames/enh-ACK frames may be used to avoid situations in which an IEEE 802.15.4 frame wouldn't be received successfully at the commissioner device due to the need for the device to handle BLE connection events.

After a device (e.g., commissionee device 254 of FIG. 2), enters the "Operational Discovery and CASE" phase of connection setup (e.g., steps 213 and 214 of FIG. 2, respectively), most of the BLE traffic is represented by empty messages for keeping the BLE connection alive, while the commissioner device 252 listens for the corresponding IEEE 802.15.4 to move the commissionee device 254 onto the established IEEE 802.15.4 channel.

In accordance with an embodiment of the present system, therefore, the operation of the commissioner device 252 may be modified such that commissioner device 252 is configured such that when the device sends the "Trigger joining of operational network at the Commissionee" command (e.g., 212 of FIG. 2), commissioner device 252 may also trigger the sending of an LL_SUBRATE_IND message with a large value of the subrate connection parameter. By doing this, commissioner device 252 will not be required to switch to BLE mode so often, while executing discovery of commissionee device 254 on the operational network (e.g., step 213 of FIG. 2). This subrate connection parameter should be chosen depending on the connection interval and application latency requirements of the particular network application.

In an embodiment, this may be implemented by configuring commissioner device 252 to count the number of sequential BLE master wake-up message received, where the message are empty packets. If the count exceeds a specific threshold (dependent on latency/connection interval parameters) then the LL_SUBRATE_IND is scheduled for transmission.

As described above, poor scheduling of BLE anchor points can significantly increase the probability of losing IEEE 802.15.4 frames when a commissioner device (e.g., commissioner device 252 of FIG. 2) is commissioning multiple commissionee devices (e.g., commissionee device 254 of FIG. 2). As such, the present disclosure provides an improved mechanism for the scheduling of BLE anchor points in such communication conditions. Specifically, the present disclosure provides improved approaches for scheduling of BLE anchor points to mitigate or reduce network communication interference that may occur in conjunction with step

In the following description, the following terms and corresponding definitions are used. *time_unit* is equal to the length of the communication system's connection interval. Each anchor point from the time_unit will have a corresponding *current_consecutive_conn_events,* set to 1 in the first phase of the algorithm. In the communication scheme, the connection event length for a commissionee device should be computed as the maximum time required for sending a single BLE data packet with maximum size (251 bytes) at the selected BLE PHY rate (e.g., approximately 2.1 ms at 1M BLE PHY) plus some margin (e.g., 0.4 ms) (*connection_event_length*). Given the pattern of the BLE commissioning traffic, devices are unlikely to exchange more than one data packet per connection interval. In order to make sure that a connection event won't exceed 2.5 ms, therefore, the BLE link layer (LL) (i.e., the communication layer that interfaces to the physical layer in BLE communications) is configured to close a connection event after this time, even if a BLE packet with the more data (MD) bit unset was not received, which indicates that the peer device may have more data to send (if MD bit was set in the last received packet) but, even so, the connection is forced closed. Additionally, the anchor point for the first commissionee device can occur at anytime within the connection interval.

Given these conditions, the commissioner device (e.g., commissioner device 252 of FIG. 2) is configured such that the anchor point for a new commissionee device is selected within the connection interval at a location within the connection interval equal to the anchor point of the previous anchor point for the prior commissionee device communications plus the maximum time required for sending a single BLE data packet with a maximum size. The anchor offset for the second commissionee device may be increased by the time required for sending, using an IEEE 802.15.4 transmission, 3x127 bytes of data (e.g., or about three times 4 ms). This additional offset may be required to handle situations in which the transmission of an IEEE 802.15.4 frame starts exactly when the last bytes of a BLE packet are being transferred (e.g., immediately before switching the radio to IEEE 802.15.4 mode on the commissioner device side). The anchor offset for the second commissionee device may be further increased by the inter-frame space (IFS) time, which may be at least partially dependent on the carrier-sense multiple access with collision avoidance (CSMA)/CA) parameters on the commissionee device.

In the examples presented herein, the IEEE 802.15.4 frames have duration of 2.5 ms (with parameters macMinBe = 3, maxMaxBe = 5, macMaxCsmaBackoffs = 5). The time required to transmit an IEEE 802.15.4 frame may be the sum of a 7 ms backoffs period, the TX_WARMUP_TIME, which comprises 7 symbols for a total of 4.5 ms, the .5), and the TX_CCA, which include an 8 ms. This time is defined herein as the 15.4_time, which equals the sum of these timings, or, about, 14.5 ms. It should be apparent to a person of ordinary skill in the art that these parameters are just examples and the algorithms described herein may be utilized in conjunction with other communication protocols implemented using different parameters.

With these constraints, if the new anchor point defined for a second commissionee device within the connection interval would cause a BLE data packet received beginning at that anchor point to overlap (i.e., exceed) the full duration time_unit of the current connection interval, then that BLE connection even (e.g., anchor point) can be skipped or prevented until new resources are freed. Or, alternatively, that anchor point can be moved within the connection interval according to the back-to-back anchor point algorithm described below.

These approaches can provide that when the commissioner device modifies its radio controller to switch back to IEEE 804.15.4 communications between BLE operations, that switch is useful as there will be adequate time allotted to those communications (i.e., between BLE anchor points) that the commissioner device's radio has sufficient time to successfully receive a full frame of IEEE 802.15.4 data of maximum length.

As discussed above, if there is insufficient room left within a communication interval to schedule a BLE anchor point with adequate separation to receive an IEEE 802.15.4 data transmission, a back-to-back BLE anchor point schedule algorithm may be utilized, as described below.

In various communication scheduling schemes, the back-to-back anchor point allocation algorithm may only be utilized if the current time interval unit is full of spaced-apart BLE anchor points (i.e., where each anchor point is separated by a time period *15.4 time,* as described below).

Using the back-to-back anchor point allocation algorithm, the steps for establishing the anchor point location (Anchor_{new}) for a new BLE commissionee device within a current connection interview may involve: if the difference between the length of the time_unit and the last anchor point from the time unit is less than *15.4_time* + *connection_event_length* then the algorithm stops - there is insufficient time to allocate a new anchor point with sufficient spacing to allow for intervening 802.15.4 communications. If, however, the difference is greater, the algorithm computes how many BLE connection events (e.g., BLE anchor points) can fit within in the remaining *15.4_time* using the expression max_*conn_events =* int(*15.4_time* / *connection*_*event_length*). With the *max_conn*_*events* value determined, anchor points are determined within the connection interval for anchor points having indexes (Anchor_{curr}) up to *max_conn_events* according to the following algorithm:
1. Increment *current_consecutive_conn_events* for Anchor_{curr}
2. Compute *Anchor_{new}* starting time as the starting point for *Anchor_{curr} + connection_event_length* * *current_consecutive_conn_events*
3. Delay all the following anchor points by a duration equal to *connection_event_length*

Using this algorithm, it is possible to ensure that at most two 802.15.4 frames (initial frame plus its retransmission) are lost during the handling of back-to-back BLE events.

In an embodiment, this algorithm is used to manage BLE connections having the same connection lengths. In various embodiments, it may be possible for a commissioner device to force BLE connection events to each have the same length, if necessary. Additionally, the algorithm may presume that there is a maximum of one data packet exchanged per BLE connection event. As such, in an embodiment, the algorithm may cause "connection event blocking" in the event that more data packets are scheduled to be exchanged during a single connection event. This would be very rare in a Matter Commissioning scenario (e.g.: only during 2/3 connection events when the certificates need to be exchanged) and would only delay the BLE time by a few connection events.

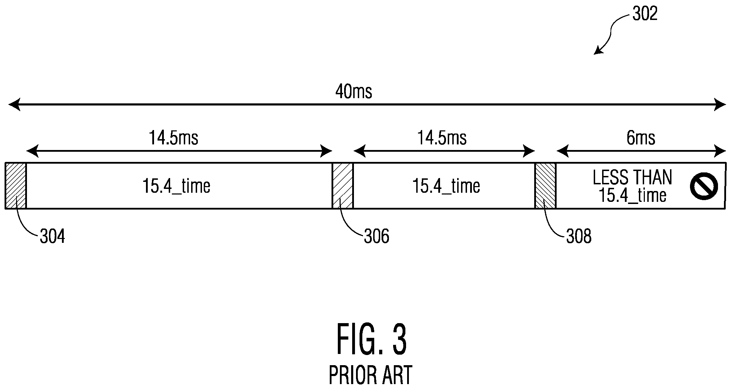

In accordance with these approaches, FIGS. 3-6 are illustrations depicting an algorithm for distributing BLE anchor points within a communication time interval. In the depicted examples, the connection interval has an example duration of 40 ms, though it should be apparent that the BLE anchor point scheduling algorithm may be utilized in conjunction with connection intervals of different durations. Additionally, in this example, the maximum amount of time required for the transmission of 251bytes at 1M PHY rate 2.5ms (2.1ms + 0.4ms). The *15.4_time* (e.g., the minimum amount of time that the radio needs to stay in 802.15.4 mode to increase the chance for reception and/or transmission of an 802.15.4 frame and its corresponding ACK (both of max 15.4 length)) in this example is equal to 14.5 ms. In other words, this is the time required for sending, using IEEE 802.15.4 communication, 3x127 bytes of data (~3x4ms). This is required for handling the case when the transmission of an IEEE 802.15.4 frame starts exactly when the last bytes of a BLE packet are being transferred (e.g.: right before switching the radio to 15.4 on the commissioner side).

Referring to FIG. 3, in this example, within connection interval 302, anchor point 304 is defined for a first commissionee device at the beginning (i.e., the far left side) of the connection interval 302 at time t = 0 ms. Anchor point 306 is defined for a second commissionee device the IEEE 802.15.4 time interval (15.4_time) plus the duration of anchor point 304 (i.e., 2.5 ms) after anchor point 304 at time t = 17 ms. In this configuration there is adequate time (e.g., a time duration of *15.4_time*) between the end time of anchor point 304 and the beginning time of anchor point 306 (in this example, 14.5 ms or greater) to enable an 802.15.4 data frame to be transmitted between anchor points 304 and 306.

In this example, a third anchor point 308 is attempted to be placed 15.4_time after anchor point 306 for a third commissionee device. However, this placement of anchor point 308 is not efficient as the time remaining within connection interval 302 after anchor point 308 is only 6 ms, which is less than *15.4_time,* meaning that an IEEE 802.15.4 communication cannot occur after anchor point 308. As such, the present algorithm can optimize the placement of anchor point 308 to maximum the number of IEEE 802.15.4 transmissions that can occur during connection interval 302.

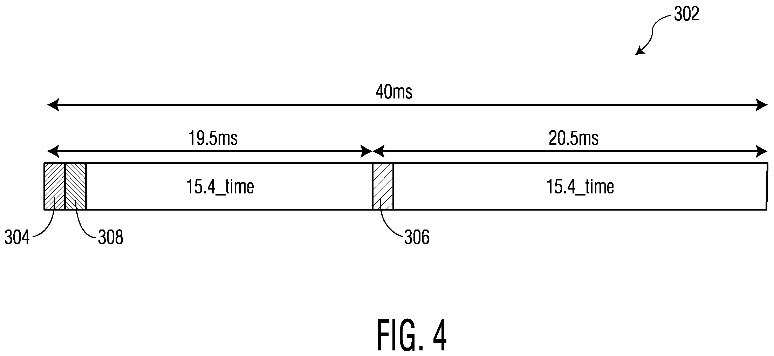

Specifically, with reference to FIG. 4, anchor point 308 is moved to be proximate to anchor point 304. In an embodiment, this involves the beginning of anchor point 308 being scheduled for the time period immediately following the end time of anchor point 304. As such, anchor point 308 is scheduled, in the example depicted in FIG. 4 at time t = 2.5 ms. When anchor point 308 is scheduled, anchor point 306 is delayed by 2.5 ms to account for the additional anchor point 308. This ensures that there is *15.4_time* between the end of anchor point 308 and beginning of anchor point 306 enabling an IEEE 802.15.4 transmission to occur between anchor point 308 and anchor point 306.

By shuffling anchor point 308 to the beginning of the communication interval 302, adequate time remains after anchor point 306 for a second IEEE 802.15.4 transmission.

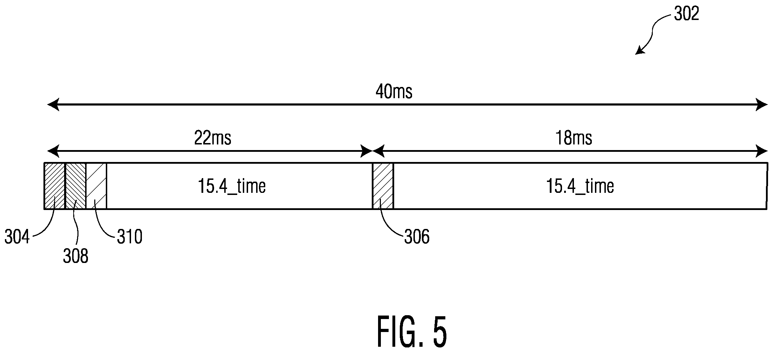

FIG. 5 depicts the example where an anchor point 310 is defined for a fourth commissionee device in an manner so as to maximize a number of IEEE 802.15.4 transmissions that may occur during communication interval 302.

Specifically, with reference to FIG. 5, anchor point 310 is positioned to be proximate to anchor point 308 at the beginning of connection interval 302. In an embodiment, this involves anchor point 310 being scheduled for the time period immediately following anchor point 308. As such, anchor point 310 is scheduled, in the example depicted in FIG. 5 at time t = 5 ms.

When anchor point 310 is scheduled, anchor point 306 is automatically delayed by a further 2.5 ms to account for the additional anchor point 310. This ensures that there is *15.4_time* between the end of anchor point 310 and beginning of anchor point 306 enabling an IEEE 802.15.4 transmission to occur between anchor point 310 and anchor point 306. By shuffling anchor point 310 to the beginning of the communication interval 302 and delaying anchor point 306 accordingly, adequate time remains after anchor point 306 for a second IEEE 802.15.4 transmission.

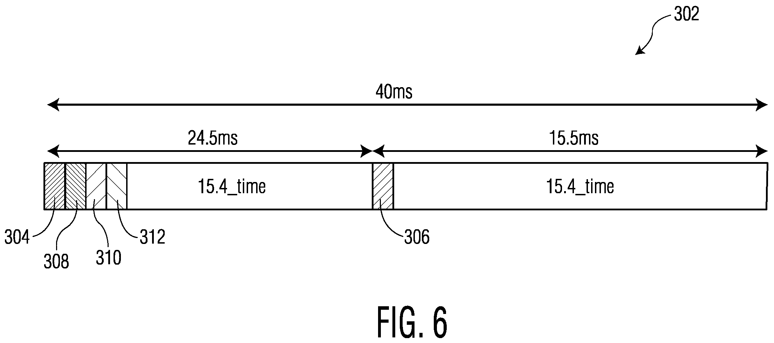

FIG. 6 depicts the example where an anchor point 312 is defined for a fifth commissionee device in a manner so as to maximize a number of IEEE 802.15.4 transmissions that may occur during communication interval 302.

Specifically, with reference to FIG. 6, anchor point 312 is positioned to be proximate to anchor point 310 at the beginning of connection interval 302. In an embodiment, this involves anchor point 312 being scheduled for the time period immediately following anchor point 310. As such, anchor point 312 is scheduled, in the example depicted in FIG. 6 at time t = 7.5 ms. When anchor point 312 is scheduled, anchor point 306 is automatically delayed by a further 2.5 ms to account for the additional anchor point 312. This ensures that there is *15.4_time* between the end of anchor point 312 and beginning of anchor point 306 enabling an IEEE 802.15.4 transmission to occur between anchor point 312 and anchor point 306. By shuffling anchor point 312 to the beginning of the communication interval 302 and delaying anchor point 306 accordingly, adequate time remains after anchor point 306 for a second IEEE 802.15.4 transmission.

During IEEE 802.15.4 communications, information may be transmitted via a number of retransmissions. In the event that all retransmissions that occur within a particular communication interval are not all successfully received, the entire data packet that was being transmitted may need to be retransmitted. This can increase the latency of IEEE 802.15.4 transmissions with corresponding impact on the user experience. To mitigate these retransmission issues (and particularly in the case of retransmissions occurring in conjunction with BLE communications) the "datagram_size" field of the first IEEE 802.15.4 fragment is utilized is used to describe the IEEE 802.15.4 data payload to reduce instances requiring packet retransmission.

In a particular embodiment, the datagram_size field is an 11-bit field that encodes the size of the entire packet before link-layer fragmentation (but after IP layer fragmentation). The value of datagram _size can be the same for all link-layer fragments of an IP packet.

In describing the present method, the terms *start 15.4 =* 0, *end_15.4 =* 0 where *[start 15.4, end_15.4]* is a time interval that specifies for how long the radio should be prioritized for IEEE 15.4 communications.

In accordance with the present algorithm, the commissioner device (e.g., commissioner device 252 of FIG. 2) enables operation of its dual-mode radio. At some time thereafter (i.e., *current_time*) receipt of the first fragment of an IEEE 802.15.4 communication is completed. At that time the value *start_15.4* is set equal to *current_time.*

With the first fragment of an IEEE 802.15.4 packet is received, the anchor point selection algorithm described herein can provide that (in case there are no air interferences) the second retransmission of a large IEEE 802.15.4 packet is successfully received as the anchor point scheduling algorithm can ensure gaps of 15.4_time between anchor points thereby allowing successful receipt of IEEE 802.15.4 transmissions.

At this time (i.e., upon receipt of the first 802.15.4 packet), the received *datagram_size* field is parsed and the commissioner device is configured to compute the total time required for receiving all the fragments of the IEEE 802.15.4 data packet that is being transmitted. Generally, this time can be calculated based upon the following values: mac_header_size = size of the MAC header of the first fragment that is received; payload_max_len_frag1 = 127 - 2 - 8 - mac_header_size; payload_max_len_fragN = 127 - 4 - mac_header_size; and number_of_frags = 1 + Round((*datagram*_*size* - *40* - *8*)/payload_max_len_fragN).

In that case, the total time required to receive the IEEE 802.15.4 packet (*total_time*) is equal to (mac_header_size + 2 + 8 + payload_max_len_frag1) / *15.4 PHY RATE* + ((mac_header_size + 4 + payload_max_len_fragN)/ *15.4_PHY_RATE)* * *number_of_frags* + *IFS* * number_of_frags. Specifically, the *total_time* is the time required for receiving all the frames of the transmitted packet if the receiving device's radio controller is configured in IEEE 802.15.4 mode at all times. The value of *total_time* is then increased to account for the time required for sending immediate ACKs for each received packet length. Specifically, *total_time* is increased by the value of corresponding to *immediate_ack_len,* which is equal to SHR - Synchronization Header (4 bytes: Preamble + 1 bytes: SFD) + PHY Header (1 byte) + part of the MAC Header (depending on the addressing fields length this can count up to 23 bytes) for a total of 29 bytes, plus the spacing time required for acknowledgement interframe spacing (AIS), which in embodiments is equal to about 192us. As such, total_time is set equal to [(AIFS + immediate_ack_len) * number_of_frags] / 15.4_PHY_RATE. A value of *candidate_end_15_4* is then set equal to *start_15_4* plus the determined *total*_*time.*

With knowledge of the *start_15_4* time and the *candidate*_*end_15_4* time, the commissioner device can then compute how many connections events belonging to the first time_unit fit within the time period [*start_15_4, candidate*_*end_15_4*]*.* Depending on this, the commissioner device can determine how many 15.4 packets may not be received due to handling connection events.

Based on this determination, the commissioner device determines the time required for retransmission of the IEEE 802.15.4 packets (*time_for_missed_packets*) that won't be received because the radio will handle connection events belonging to the first time_unit. The value *end_15_4* is then set equal to *candidate_end_15_4* + *time_for_missed_packets.* With the value *end_15_4* determined, the commissioner device will not configure its radio controller to communicate via BLE until the commissioner device's timer reaches the value *end_15_4.*

Consequently, the commissioner device can determine, for each commissionee device, how many connection intervals (i.e., anchor points) needs to be skipped in order to maintain the commissioner device's radio controller in IEEE 802.15.4 mode for the *total_time* duration. If that determination indicates that more than one commissioner connection interval (e.g., BLE anchor point) must be skipped, then at the first connection event with that commissionee device, the commissioner device sends a LL_SUBRATE_IND instruction with a Subrate Factor that equals with the number of connection intervals that needs to be skipped.

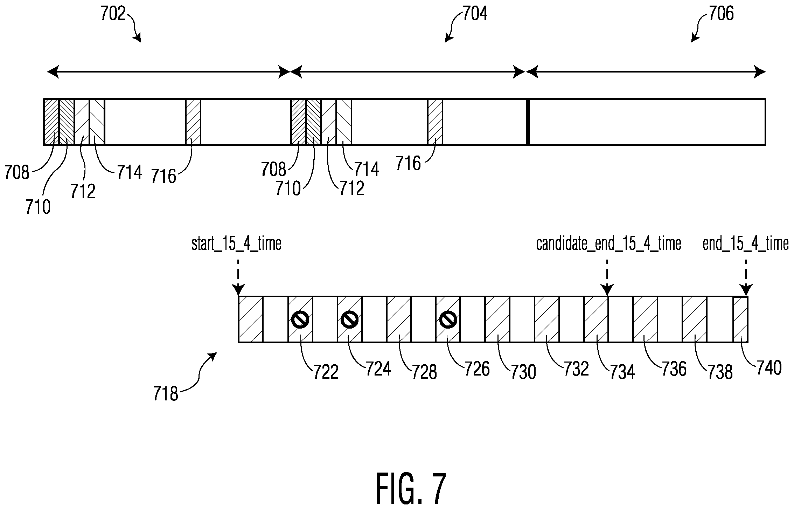

FIG. 7 depicts the present communication protocol in which a commissioner device may be configured to skip or ignore BLE transmissions occurring in during BLE anchor points to ensure successful receipt of 802.15.4 data transmissions. In FIG. 7 a timeline is depicted showing three different connection intervals 702, 704, and 706. Connection intervals 702, 704, and 706 in this example may have a duration of 40 ms. As depicted, within connection intervals 702 and 704 a number of reoccurring BLE anchor points 708 - 716 have been defined, where each anchor point may be utilized to commission a number of different commissionee devices, as described herein.

At the time, a number of 802.15.4 data fragments 718 belonging to an 802.15.4 packet are being transmitted. The first data fragment 718 is received at a time equal to start_15_4_time. Based on receipt of that initial fragment, the time candidate_end_15_4_time can be calculated by the commissioning device assuming all packets are successfully received. However, as illustrated by FIG. 7, data fragments 722, 724, and 726 are not successfully received as they are transmitted at the same time that BLE anchor points 708, 714, and 716 occur. As discussed above, because BLE communications take priority 802.15.4 transmissions, those fragments are not successfully transmitted. As such, those fragments are retransmitted as fragments 728 and 730 along with the remaining fragments 732 - 740 of the 802.15.4 packet. In accordance with this algorithm, the commissioner device is configured to ignore anchor points that occur in connection interval 706 to ensure the retransmitted packets are successfully received. Transmission of the final fragment 740 of the 802.15.4 data packet is transmitted at time end_15_4_time, which has been adjusted to compensate for the retransmitted data fragments.

This algorithm can be extrapolated for more complex instances in which each time an IEEE 802.15.4 packet is received, all the fragments of a specific packet may not be received back-to-back but a first fragment from a different connected 802.15.4 device may be received. In that case, the commissioner device is configured to update the *end_15.4* value accordingly and new LL_SUBRATE_IND may be needed. In some cases, the 6lowpan TX queue of the receiving device may not be empty. In that case, similarly, the *end_15_4* must be updated and new LL_SUBRATE_IND may be needed. Typically, the commissioner device is configured to update the value *end_15.4* each IEEE 802.15.4 data packet fragment receipt or transmission (a multicast transmission may interpolate between the fragments of a larger packet). LL_SUBRATE_IND for the first connection event that needs to be handled will reflect the updated value of *end_15.4.*

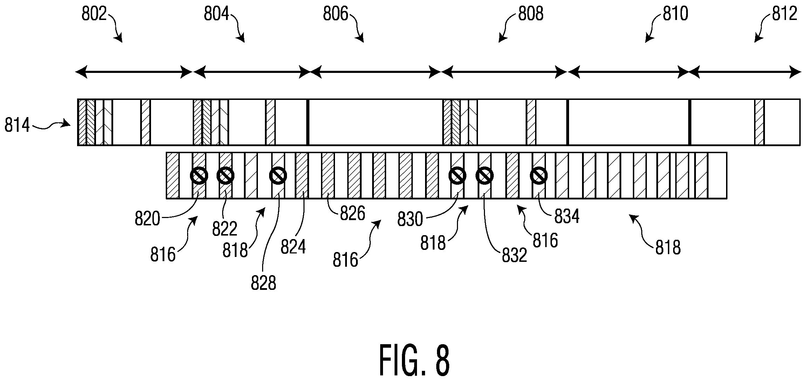

FIG. 8 depicts the present communication protocol in which a commissioner device may be configured to skip or ignore BLE transmissions occurring during BLE anchor points to ensure successful receipt of 802.15.4 data transmissions from multiple transmitting devices. In FIG. 8 a timeline is depicted showing six different connection intervals 802, 804, 806, 808, 810, and 812. As depicted, within connection intervals 802, 804, 808, and 812 a number of reoccurring BLE anchor points 814 have been defined, where each anchor point may be utilized to commission a number of different commissionee devices, as described herein.

At the time, a number of 802.15.4 data packets are being transmitted by two different commissionee devices. As illustrated by FIG. 8, within data fragment 816 transmissions of the packet transmitted by the first device, data fragments 820 and 822 are not successfully received as they are transmitted at the same time that BLE anchor points 814 occur. As discussed above, because BLE communications take priority over 802.15.4 transmissions, those fragments 820, 822 are not successfully transmitted. As such, those fragments are retransmitted as fragments 824, 826 along with the remaining fragments 826 of that 802.15.4 packet. In accordance with this algorithm, the commissioner device is configured to ignore anchor points that occur in connection intervals 806 and 808 to ensure the retransmitted fragments are successfully received.

Similarly, within data fragment 818 transmissions of the second packet transmitted by the second device, data fragments 828, 830, 832, and 834 are not successfully received as they are transmitted at the same time that BLE anchor points 814 occur. As discussed above, because BLE communications take priority over 802.15.4 transmissions, those fragments 828, 830, 832, and 834 are not successfully transmitted. As such, those fragments are retransmitted along with the remaining fragments of that 802.15.4 packet. In accordance with this algorithm, the commissioner device is configured to ignore anchor points that occur in connection intervals 810 and 812 to ensure the retransmitted fragments are successfully received.

In use-cases where a single commissionee device needs to be commissioned, then device synchronization between the radios of the commissioner device (e.g., commissioner device 252 of FIG. 2) and commissionee device (e.g., commissionee device 254 of FIG. 2) can be accomplished implicitly through BLE communications in which case both device radio controllers will be switched to BLE for handling connection events and both radio controllers switch back to IEEE 802.15.4 mode once the network connection event has completed.

This synchronization mechanism can be extended for use-cases with multiple commissionee devices by making use of BLE connections that need to be kept alive for each commissionee that has started thread communication but hasn't completed the commissioning process.

In that case, once a commissionee device is attached to the thread network, BLE traffic for that device mostly consists of the exchange of empty frames to maintain that BLE connection. Instead of sending BLE empty frames to keep those connections alive, an alternative approach is presented in which BLE frames are transmitted containing BLE timing information that includes connection interval period, time remaining until the next connection interval, and time periods/slots when the radio will be in BLE mode (e.g., handling connection events). There are multiple ways for encapsulating the above information in a vendor specific way. The receiver of the BLE timings information should avoid sending any IEEE 802.15.4 frame during the time slots reserved for BLE.

In various embodiments, dual-mode radio controllers can be configured to send 802.15.4 data frames only when the radio is configured in its 802.15.4 mode. This can be achieved by forcing the dual-mode radio controller to reply with enh-ACKs containing BLE timing information that includes connection interval period, time remaining until the next connection interval, and time periods/slots when the radio will be in BLE mode (handling connection events). While the BLE frames can be used for the synchronization of commissionees which haven't yet finished the commissioning process, the enh-ACKs can be used post-commissioning for making sure that the traffic from the existing devices to the Border Router is protected against retransmissions/misses.

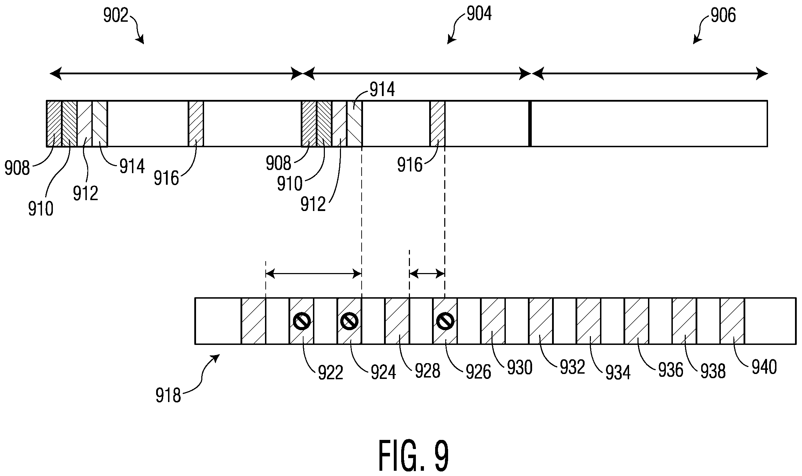

FIG. 9 depicts the present communication protocol in which a commissioner device may be configured to cause a recipient device to skip or ignore BLE anchor points to ensure successful delivery of 802.15.4 data transmissions. In FIG. 9 a timeline is depicted showing three different connection intervals 902, 904, and 906. Connection intervals 902, 904, and 906 in this example may have a duration of 40 ms. As depicted, within connection intervals 902 and 904 a number of reoccurring BLE anchor points 908 - 916 have been defined, where each anchor point may be utilized to commission a number of different commissionee devices, as described herein.

At the time, a number of 802.15.4 data fragments 918 are being transmitted. As illustrated by FIG. 9, data fragments 922, 924, and 926 are not successfully received as they are transmitted at the same time that BLE anchor points 908, 914, and 916 occur. As discussed above, because BLE communications take priority 802.15.4 transmissions, those fragments are not successfully transmitted. As such, those fragments are retransmitted as fragments 928 and 930 long with the remaining fragments 932 - 940 of the 802.15.4 transmission. These retransmissions only occur during time intervals when the recipient device's radio controller is in 802.15.4 mode (and is, essentially, ignoring the scheduled BLE anchor points that may otherwise have occurred during connection interval 906). This can be ensured by the transmitting device transmitting fragments with enh-ACKs containing BLE timing information, which may specify the connection interval period, time remaining until the next connection interval, and time periods or time slots when the radio controller will be in BLE mode in order to handle connection events.

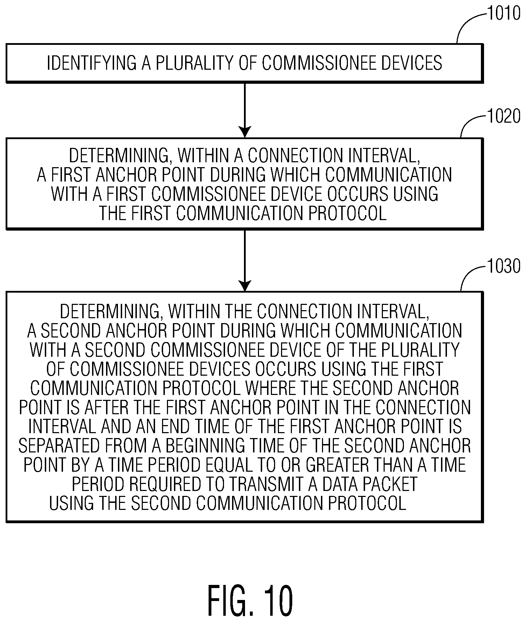

FIG. 10 is a flow chart depicting a method that may be implemented by anchor point scheduling subsystem 114 of commissioning device 104 of FIG. 1 or commissioner device 252 of FIG. 2. In step 1010, the commissioner device is configured to identify a set of commissionee devices (e.g., devices that require commissioning). The commissioner device is configured to communicate with each of the commissionee devices using a first and second communication protocol (e.g., BLE and 802.15.4 communication protocols). The commissioner device is configured to communicate with the various commissionee device during time interval that are determined by one of the first and second communication protocols.

In step 1020, the commissioner device is configured to determine, within a particular connection interval, a first anchor point during which communication with a first commissionee device out of the plurality of commissionee device occurs. The anchor point defines a time interval during which communications may occur using one of the first and second communication protocols.

In step 1030, the commissioner device is configured to determine a second anchor point that occurs during the connection interval for communications with a second commissionee device. In this step, the commissioner device is configured to determine the second anchor point as being after the first anchor point in the connection interval such that an end time of the first anchor point is separated from a beginning time of the second anchor point by a time period equal to or greater than a time period required to transmit a data packet using the second communication protocol. This approach (as depicted in FIGS. 4 - 6) is generally configured to ensure that within a particular communication protocol a maximum number of BLE anchor points can be allocated, while leaving sufficient time for a maximum number of 802.15.4 to occur successfully. This approach, therefore, can maximize communications with commissionee devices, while minimizing interference with ongoing 802.15.4 communications.

Clause 1. A system, comprising: an antenna; a radio controller electrically connected to the antenna, wherein the radio controller is configured to process signals received from the antenna using a first communication protocol or a second communications and encode signals for transmission by the antenna using the first communication protocol or the second communication protocol; and a controller configured to: determine a plurality of commissionee devices, determine, within a connection interval, a first anchor point during which communication with a first commissionee device occurs using the first communication protocol, and determine, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol; and receive, during a time period determined by the second anchor point, a data transmission from the second commissionee device.

Clause 2. The system of clause 1, wherein the first communication protocol is a BLUETOOTH Low Energy (BLE) communication protocol.

Clause 3. The system of clause 2, wherein the second communication protocol is an Institute of Electrical and Electronic Engineers 802.15.4 (IEEE) 802.15.4 communication protocol.

Clause 4. The system of clause 3, wherein a start time of the first anchor point and the start time of the second anchor point are separated by a time duration equal to or greater than a first time required to transmit a BLE packet using the first communication protocol plus a second time required to transmit an IEEE 802.15.4 data frame using the second communication protocol.

Clause 5. The system of clause 1, wherein a duration of the connection interval is determined by the second communication protocol.

Clause 6. The system of clause 1, wherein the controller is configured to determine, within the connection interval, a third anchor point during which communication with a third commissionee device of the plurality of commissionee devices occurs using the first communication protocol.

Clause 7. The system of clause 6, wherein the controller is configured to: determine that a time period between an end time of the second anchor point and an end time of the connection interval is less than the time period required to transmit the data packet using the second communication protocol; and determine a start time of the third anchor point is immediately after the end time of the first anchor point.

Clause 8. The system of clause 7, wherein the controller is configured to delay the start time of the second anchor point by a time period equal to a duration of the first anchor point.

Clause 9. The system of clause 1, wherein the controller is configured to transmit an LL_SUBRATE_IND message to the first commissionee device, wherein the LL_SUBRATE_IND message includes a subrate connection parameter configured to prevent the first commissionee device from transmitting an empty keep alive BLE transmission.

Clause 10. A system, comprising: an antenna; a radio controller electrically connected to the antenna, wherein the radio controller is configured to process signals received from the antenna using a first communication protocol or a second communications and encode signals for transmission by the antenna using the first communication protocol or the second communication protocol; and a controller configured to: determine, within a connection interval, a plurality of anchor points during which communication with a plurality of commissionee devices occurs using the first communication protocol, receiving a first signal from the antenna, decoding the first signal using the second communication protocol, wherein the first signal encodes an indication of a size of a first data frame encoded by the first signal, determining, using the size of the first data frame, a first anchor point of the plurality of anchor points that will occur at the same time a fragment of the first data frame is scheduled to be received, and transmitting, to a first commissionee device out of the plurality of commissionee devices, wherein the first commissionee device is associated with the first anchor point, an instruction causing the first commissionee device to not transmit data during the first anchor point.

Clause 11. The system of clause 10, wherein the first communication protocol is a BLUETOOTH Low Energy (BLE) communication protocol.

Clause 12. The system of clause 11, wherein the second communication protocol is an Institute of Electrical and Electronic Engineers 802.15.4 (IEEE) 802.15.4 communication protocol.

Clause 13. The system of clause 10, wherein a duration of the connection interval is determined by the second communication protocol.

Clause 14. A method, comprising: determining, by a commissioner device, a plurality of commissionee devices, wherein the commissioner device includes an antenna and a radio controller electrically connected to the antenna, wherein the radio controller is configured to process signals received from the antenna using a first communication protocol or a second communications and encode signals for transmission by the antenna using the first communication protocol or the second communication protocol; determining, within a connection interval, a first anchor point during which communication with a first commissionee device occurs using the first communication protocol, and determining, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol.

Clause 15. The method of clause 14, further comprising determining the first communication protocol is a BLUETOOTH Low Energy (BLE) communication protocol.

Clause 16. The method of clause 15, further comprising determining the second communication protocol is an Institute of Electrical and Electronic Engineers 802.15.4 (IEEE) 802.15.4 communication protocol.

Clause 17. The method of clause 16, further comprising determining that a start time of the first anchor point and the start time of the second anchor point are separated by a time duration equal to or greater than a first time required to transmit a BLE packet using the first communication protocol plus a second time required to transmit an IEEE 802.15.4 data frame using the second communication protocol.

Clause 18. The method of clause 14, further comprising determining, within the connection interval, a third anchor point during which communication with a third commissionee device of the plurality of commissionee devices occurs using the first communication protocol.

Clause 19. The method of clause 18, further comprising: determining that a time period between an end time of the second anchor point and an end time of the connection interval is less than the time period required to transmit the data packet using the second communication protocol; and determining a start time of the third anchor point is immediately after the end time of the first anchor point.

Clause 20. The method of clause 19, further comprising delaying the start time of the second anchor point by a time period equal to a duration of the first anchor point.

A commissioner device is configured to determine, within a connection interval, a first anchor point during which communication with a first commissionee device occurs using the first communication protocol. The commissioner device is configured to determine, within the connection interval, a second anchor point during which communication with a second commissionee device of the plurality of commissionee devices occurs using the first communication protocol. The second anchor point is after the first anchor point in the connection interval and an end time of the first anchor point is separated from a beginning time of the second anchor point by a time period equal to or greater than a time period required to transmit a data packet using the second communication protocol. The commissioner device is configured to receive, during a time period determined by the second anchor point, a data transmission from the second commissionee device.

As will be appreciated by one skilled in the art, aspects of the present disclosure may be embodied as a system, process, method, and/or program product. Accordingly, various aspects of the present disclosure (e.g., the machine learning system) may take the form of an entirely hardware embodiment, an entirely software embodiment (including firmware, resident software, micro-code, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

A computer readable storage medium may be, for example, but not limited to, an electronic, magnetic, optical, electromagnetic, infrared, biologic, atomic, or semiconductor system, apparatus, controller, or device, or any suitable combination of the foregoing, wherein the computer readable storage medium is not a transitory signal per se. More specific examples (a non-exhaustive list) of the computer readable storage medium may include the following: an electrical connection having one or more wires, a portable computer diskette, a hard disk, a random access memory ("RAM"), a read-only memory ("ROM"), an erasable programmable read-only memory ("EPROM" or flash memory), an optical fiber, a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, controller, or device. Program code embodied on a computer readable signal medium may be transmitted using any appropriate medium, including but not limited to wireless, wire line, optical fiber cable, RF, etc., or any suitable combination of the foregoing.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, controller, or device.

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single data set, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions. For example, a module may be implemented as a hardware circuit including custom VLSI circuits or gate arrays, off-the-shelf semiconductors such as logic chips, transistors, controllers, or other discrete components. A module may also be implemented in programmable hardware devices such as field programmable gate arrays, programmable array logic, programmable logic devices, application specific ICs, microcontrollers, systems on a chip, general purpose processors, microprocessors, or the like.

Computer program code, i.e., instructions, for carrying out operations for aspects of the present disclosure may be written in any combination of one or more programming languages, including an object-oriented programming language such as Java, Smalltalk, Python, C++, or the like, conventional procedural programming languages, such as the "C" programming language or similar programming languages, or any of the machine learning software disclosed herein.

These program instructions may also be stored in a computer readable storage medium that can direct a computer system, other programmable data processing apparatus, controller, or other devices to function in a particular manner, such that the instructions stored in the computer readable medium produce an article of manufacture including instructions which implement the functions/acts specified in the block diagram block or blocks.

The program instructions may also be loaded onto a computer, other programmable data processing apparatus, controller, or other devices to cause a series of operational steps to be performed on the computer, other programmable apparatus or other devices to produce a computer implemented process such that the instructions which execute on the computer, other programmable apparatus, or other devices provide processes for implementing the functions/acts specified in the block diagram block or blocks.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system, comprising:
an antenna;
a radio controller electrically connected to the antenna, wherein the radio controller is configured to process signals received from the antenna using a first communication protocol or a second communications and encode signals for transmission by the antenna using the first communication protocol or the second communication protocol; and
a controller configured to:
determine a plurality of commissionee devices,
determine, within a connection interval, a first anchor point during which communication with a first commissionee device occurs using the first communication protocol, and
determine, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol;
and
receive, during a time period determined by the second anchor point, a data transmission from the second commissionee device.

2. The system of claim 1, wherein the first communication protocol is a BLUETOOTH Low Energy (BLE) communication protocol.

3. The system of claim 2, wherein the second communication protocol is an Institute of Electrical and Electronic Engineers 802.15.4 (IEEE) 802.15.4 communication protocol.

4. The system of claim 3, wherein a start time of the first anchor point and the start time of the second anchor point are separated by a time duration equal to or greater than a first time required to transmit a BLE packet using the first communication protocol plus a second time required to transmit an IEEE 802.15.4 data frame using the second communication protocol.

5. The system of any preceding claim, wherein a duration of the connection interval is determined by the second communication protocol.

6. The system of any preceding claim, wherein the controller is configured to determine, within the connection interval, a third anchor point during which communication with a third commissionee device of the plurality of commissionee devices occurs using the first communication protocol.

7. The system of claim 6, wherein the controller is configured to:
determine that a time period between an end time of the second anchor point and an end time of the connection interval is less than the time period required to transmit the data packet using the second communication protocol; and
determine a start time of the third anchor point is immediately after the end time of the first anchor point.

8. The system of claim 7, wherein the controller is configured to delay the start time of the second anchor point by a time period equal to a duration of the first anchor point.

9. The system of any preceding claim, wherein the controller is configured to transmit an LL_SUBRATE_IND message to the first commissionee device, wherein the LL_SUBRATE_IND message includes a subrate connection parameter configured to prevent the first commissionee device from transmitting an empty keep alive BLE transmission.

10. A method, comprising:
determining, by a commissioner device, a plurality of commissionee devices, wherein the commissioner device includes an antenna and a radio controller electrically connected to the antenna, wherein the radio controller is configured to process signals received from the antenna using a first communication protocol or a second communications and encode signals for transmission by the antenna using the first communication protocol or the second communication protocol;
determining, within a connection interval, a first anchor point during which communication with a first commissionee device occurs using the first communication protocol, and
determining, within the connection interval, a second anchor point during which communication with a second commissionee device of the plurality of commissionee devices occurs using the first communication protocol, wherein the second anchor point is after the first anchor point in the connection interval and an end time of the first anchor point is separated from a beginning time of the second anchor point by a time period equal to or greater than a time period required to transmit a data packet using the second communication protocol.

11. The method of claim 10, further comprising determining the first communication protocol is a BLUETOOTH Low Energy (BLE) communication protocol.

12. The method of claim 11, further comprising determining the second communication protocol is an Institute of Electrical and Electronic Engineers 802.15.4 (IEEE) 802.15.4 communication protocol.

13. The method of claim 12, further comprising determining that a start time of the first anchor point and the start time of the second anchor point are separated by a time duration equal to or greater than a first time required to transmit a BLE packet using the first communication protocol plus a second time required to transmit an IEEE 802.15.4 data frame using the second communication protocol.

14. The method of any of claims 10 to 13, further comprising determining, within the connection interval, a third anchor point during which communication with a third commissionee device of the plurality of commissionee devices occurs using the first communication protocol.

15. The method of claim 14, further comprising:
determining that a time period between an end time of the second anchor point and an end time of the connection interval is less than the time period required to transmit the data packet using the second communication protocol; and
determining a start time of the third anchor point is immediately after the end time of the first anchor point.
